# EUROPEAN PATENT SPECIFICATION

(11) **EP 2 792 733 B1**
(45) Date of publication and mention of the grant of the patent: **15.03.2017**
(21) Application number: 12858632.8
(22) Date of filing: 12.12.2012
(51) Int. Cl.: C10M 145/14, C10N 20/04, C10N 30/06, C10N 40/02, C10N 40/04, C10N 40/08, C10N 40/12, C10N 40/16, C10N 40/20, C10N 40/25, C10N 40/30, C08F 220/18

(54) **FRICTION AND WEAR REDUCING AGENT FOR LUBRICATING OIL AND LUBRICATING OIL COMPOSITION CONTAINING SAME**
REIBUNGS- UND VERSCHLEISSREDUKTIONSMITTEL FÜR SCHMIERÖL UND SCHMIERÖLZUSAMMENSETZUNG DAMIT
AGENT RÉDUISANT LA FRICTION ET L'USURE POUR HUILE LUBRIFIANTE ET COMPOSITION D'HUILE LUBRIFIANTE LE CONTENANT

(30) Priority: 13.12.2011 JP 2011272558
(43) Date of publication of application: 22.10.2014
(73) Proprietor: Adeka Corporation, Tokyo 116-8554 (JP)
(72) Inventor: TAKATA, Masahiro, Tokyo 116-8554 (JP); YAMAMOTO, Kenji, Tokyo 116-8554 (JP)
(74) Representative: Schüssler, Andrea
(86) International application number: PCT/JP2012/082225
(87) International publication number: WO 2013/089143

(56) References cited:
- EP-A1- 1 849 852
- EP-A1- 2 762 240
- EP-A1- 2 762 541
- JP-A- H02 169 694
- JP-A- 2001 049 284
- JP-A- 2006 522 176
- JP-A- 2008 133 440
- JP-A- 2009 007 562
- JP-A- 2010 535 870
- JP-A- 2011 079 871
- JP-A- 2012 041 407
- MAMORU MORITA ET AL.: 'Hakumaku Junkatsuka ni Okeru Kannoki Donyugata Polyalkylacrylate Tenkayu no Sendan Kyodo' THE JAPAN PETROLEUM INSTITUTE NENKAI SHUKI TAIKAI KOEN YOSHISHU, DAI 40 KAI SEKIYU SEKIYU KAGAKU TORONKAI (KOBE) 25 January 2011, page 159, XP008174789

## Description

### TECHNICAL FIELD

The present invention relates to an additive for lubricating oil having both extreme pressure performance and a friction reducing effect. More specifically, the present invention relates to an additive for lubricating oil which does not substantially contain metal elements or elements such as phosphorous or sulfur but which demonstrates performance equivalent to that of conventional extreme pressure agents containing metal elements or elements such as phosphorous or sulfur and also has both friction and wear reducing effects.

### BACKGROUND ART

There are various lubricating oil applications such as metalworking oil, engine oil, drive system oil or hydraulic oil. In recent years, machinery has come to demonstrate higher levels of performance and larger size and lubricating oil has decreased in viscosity in order to realize reduced fuel consumption. Due to the effects of these changes, there are an increasing number of cases in which contact surfaces requiring lubricating oil are being subjected to higher pressures than ever before, thereby resulting in the unwanted outcome of an increase in problems stemming from excessive wear of those contact surfaces. An extreme pressure agent is commonly used to prevent such wear (see, for example, Patent Publications 1 to 3).

Patent Publication 1 describes examples of extreme pressure agents for lubricating oil that include sulfides, sulfoxides, sulfones, thiosulfides, thiocarbonates, dithiocarbonates, alkylthiocarbamoyls, fats and oils, sulfurized oils, sulfurized olefins, phosphate esters, phosphite esters, phosphate ester amine salts, phosphite ester amine salts, chlorinated hydrocarbons, chlorinated oils, zinc dithiophosphate and thiocarbamates.

Patent Publication 2 describes examples of extreme pressure agents of lubricating oils that include lead naphthenate, sulfurized fatty acid esters, sulfurized sperm oil, sulfurized terpene, dibenzyl disulfide, chlorinated paraffins, chloronaphtha xanthate, tricresyl phosphate, tributyl phosphate, tricresyl phosphite, n-butyl di-n-octyl phosphinate, di-n-butyl dihexyl phosphonate, di-n-butyl phenyl phosphonate, dibutyl phosphoroamidate and amine dibutyl phosphate.

Patent Publication 3 describes examples of extreme pressure agents of lubricating oils that include sulfurized oils, olefin polysulfides, dibenzyl sulfide, monooctyl phosphate, tributyl phosphate, triphenyl phosphite, tributyl phosphite, thiophosphate esters, thiophosphate metal salts, thiocarbamate metal salts and acidic phosphate ester metal salts.

WO 2008/053033 A2 describes a lubricating oil composition comprising a base oil, a poly (meth) acrylate containing a hydroxyl group and a metal dithiophosphate.

However, nearly all of these known extreme pressure agents contain elements such as sulfur, phosphorous, lead, zinc or chlorine as indicated above. Although these elements fulfill an important role as extreme pressure agents, there are also cases in which they cause corrosion of lubricated surfaces, cases in which they have a detrimental effect on human health, and cases in which they have a detrimental effect on the environment when disposing of lubricating oil. In consideration of an increased awareness of environmental issues and physical safety in recent years, the use of compounds containing these elements is being avoided, while there is also a strong desire to demonstrate effects using compounds composed of the three elements of carbon, hydrogen and oxygen. On the other hand, although compounds not containing metal elements such as fats and oils (see Patent Publication 1) or fatty acid esters are also known to demonstrate performance as extreme pressure agents, the level of performance of these compounds as extreme pressure agents is low, thereby preventing them from being used under severe conditions. On the basis thereof, there is a desire for a highly safe extreme pressure agent that demonstrates performance equal to that of known extreme pressure agents containing metal elements and the like without containing the above-mentioned metal elements and the like.

With the foregoing in view, the applicant of the present application filed a patent application for an invention of an extreme pressure agent not containing metal elements on August 17, 2010 (Patent Publication 4). The safety of the extreme pressure agent according to this invention is high, it demonstrates a high level of extreme pressure performance in a high load environment, and it can be preferably used for applications in which extreme pressure agents are used under high loads such as in metalworking oil or gear oil. However, in applications such as engine oil or bearing oil in which extreme pressure agents are not subjected to extremely high loads, rather than extreme pressure performance capable of withstanding high loads, extreme pressure performance capable of withstanding low loads for a long period of time is required, while also preferably having a friction reducing effect. Although the extreme pressure agent described in Patent Publication 4 has extreme pressure performance capable of withstanding high loads as well as extreme pressure performance capable of withstanding low loads over a long period of time, it does not demonstrate a friction and wear reducing effect, thus resulting in a need on the market for a safe additive, which in addition to demonstrating extreme pressure performance capable of withstanding low loads over a long period of time, simultaneously demonstrates friction and wear reducing effects.

### CONVENTIONAL ART REFERENCES

### Patent Publications

Patent Publication 1: Japanese Patent Application Laid-open No. H1-287196
Patent Publication 2: Japanese Patent Application Laid-open No. 2002-012881
Patent Publication 3: Japanese Patent Application Laid-open No. 2005-325241
Patent Publication 4: Japanese Patent Application No. 2010-182256

### SUMMERY OF THE INVENTION

Thus, a purpose of the present invention is to provide a friction and wear reducing agent as a lubricating oil additive, which does not substantially contain metal element or the like and is safe but which demonstrates extreme pressure performance equivalent to those of conventional extreme pressure agents each containing a metal element when used in lubricating application.

Therefore, as a result of conducting extensive studies, the inventors of the present invention found an additive that has extreme pressure properties and demonstrates friction and wear reducing effects without containing metal elements and the like, to complete the present invention. Namely, the present invention is a friction and wear reducing agent for lubricating oil consisting of a copolymer (A) comprising an alkyl acrylate (a) represented by the following general formula (1) and a hydroxyalkyl acrylate (b) represented by the following general formula (2) as essential constituent monomers, wherein the constitutive ratio of (a) to (b) is 50/50 to 90/10 (molar ratio) and the weight average molecular weight thereof is 2,000 to less than 40,000.

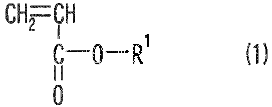

In the above formula, R¹ represents an alkyl group having 10 to 18 carbon atoms.

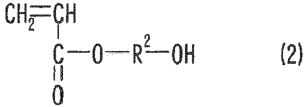

In the above formula, R² represents an alkylene group having 2 to 4 carbon atoms.

The effects of the present invention are to provide an additive which does not substantially contain metal elements or the like and is safe, more specifically, to provide a friction and wear reducing agent for lubricating oil consisting of the three elements of carbon, hydrogen and oxygen, which demonstrates extreme pressure performance equivalent to those of conventional extreme pressure agents each containing a metal element and also demonstrates a friction and wear reducing effect when used in lubricating applications.

### DETAILED DESCRIPTION OF THE INVENTION

The alkyl acrylate (a) used in the present invention is an alkyl acrylate having an alkyl group with 10 to 18 carbon atoms, and is represented by the following general formula (1): 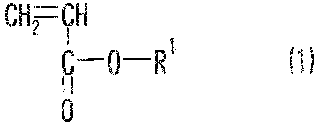 in the above formula, R¹ represents an alkyl group having 10 to 18 carbon atoms.

Examples of R¹ in the above-mentioned general formula (1) include linear alkyl groups such as a decyl group, undecyl group, dodecyl group, tridecyl group, tetradecyl group, pentadecyl group, hexadecyl group, heptadecyl group or octadecyl group; and branched alkyl groups such as a branched decyl group, branched undecyl group, branched dodecyl group, branched tridecyl group, branched tetradecyl group, branched pentadecyl group, branched hexadecyl group, branched heptadecyl group or branched octadecyl group. Among these, from the viewpoint of the balance between solubility in lubricating oil and extreme pressure properties, alkyl groups having 10 to 16 carbon atoms are preferable, alkyl groups having 10 to 14 carbon atoms are more preferable, and linear alkyl groups having 10 to 14 carbon atoms are even more preferable.

The hydroxyalkyl acrylate (b) used in the present invention is a hydroxyalkyl acrylate having an alkylene group with 2 to 4 carbon atoms, and is represented by the following general formula (2) : 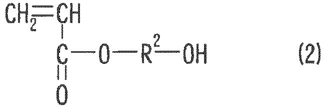 in the above formula, R² represents an alkylene group having 2 to 4 carbon atoms.

Examples of R² in the above-mentioned general formula (2) include an ethylene group, propylene group, butylene group, methyl ethylene group, methyl propylene group and dimethyl ethylene group. Among these, alkylene groups having 2 to 3 carbon atoms are preferable since they can be produced inexpensively, and an ethylene group is more preferable.

The copolymer (A) can be obtained by copolymerizing the above-mentioned monomers (a) and (b). There are no particular limitations on the polymerized form of the copolymer (A), and it may be in any of the forms of a block copolymer, random copolymer or block/random copolymer. Among these, a random copolymer is preferable due to the ease of the polymerization reaction. Since the reaction ratio of monomers (a) and (b) has a considerable effect on extreme pressure performance of the resulting copolymer as well as solubility in base oil, the reaction ratio between (a) and (b), i.e. (a)/(b) must range from 50/50 to 90/10 (molar ratio), preferably 55/45 to 85/15 (molar ratio), and more preferably 60/40 to 80/20 (molar ratio). If the ratio of the monomer (a) is larger than (a)/(b) = 90/10 (molar ratio), favorable extreme pressure performance cannot be obtained, while if the ratio of the monomer (b) is larger than (a)/(b) =50/50 (molar ratio), solubility in base oil becomes poor, thereby resulting in problems such as precipitation and clouding.

Although the copolymer (A) obtained by copolymerizing the monomers (a) and (b) is required to have a weight average molecular weight of 2,000 to less than 40,000, when considering the balance between extreme pressure effect and friction and wear reducing effects, the weight average molecular weight thereof is preferably 5, 000 to 30, 000 and more preferably 10, 000 to 25, 000. If the weight average molecular weight is less than 2,000, there are cases in which favorable extreme pressure performance and friction and wear reducing effects cannot be obtained or production may become difficult, while if the weight average molecular weight is 40,000 or higher, there are cases in which favorable friction and wear reducing effects cannot be obtained or the resulting friction and wear reducing agent may be not be soluble in base oil. In addition, weight average molecular weight is measured by GPC and is determined in terms of styrene.

There are no particular limitations on the method used to synthesize the friction and wear reducing agent for lubricating oil of the present invention, and it may be synthesized by any method provided it is a known method. Although examples of such methods include emulsification polymerization, suspension polymerization and solution polymerization, since the friction and wear reducing agent for lubricating oil of the present invention is used by adding to a base oil such as a mineral oil or synthetic oil, solution polymerization using as a solvent an organic solvent that dissolves in the base oil is preferable to a polymerization method that uses water as a solvent in the manner of emulsification polymerization or suspension polymerization. Although a step is required for removing water following completion of synthesis if emulsification polymerization or suspension polymerization is used for synthesis, in the case of solution polymerization, a product of the present invention can be added directly to a base oil while still containing solvent without having to remove the solvent used. In addition, in the case of solution polymerization, a finished product may be obtained by further adding solvent to the system following completion of polymerization, or a finished product may be obtained after removing all or a portion of the solvent.

A specific example of a method for carrying out solution polymerization comprises charging the monomer (a) and the monomer (b) in a solvent into a reactor such that the total monomers account for 5 to 80% by weight, followed by raising the temperature to about 80°C to 120°C, adding an initiator in an amount equal to 0.1 to 10 mol% based on the total amount of monomers either all at once or in several batches, stirring for about 1 hour to 20 hours, and reacting such that the weight average molecular weight becomes 2,000 to less than 40,000. Alternatively, the monomers and solvent may be charged all at once followed by raising the temperature to about 80°C to 120°C, stirring for about 1 hour to 20 hours, and reacting such that the weight average molecular weight becomes 2, 000 to less than 40,000.

Examples of solvents that can be used include alcohols such as methanol, ethanol, propanol or butanol; hydrocarbons such as benzene, toluene, xylene or hexane; esters such as ethyl acetate, butyl acetate or isobutyl acetate; ketones such as acetone, methyl ethyl ketone or methyl isobutyl ketone; ethers such as methoxybutanol, ethoxybutanol, ethylene glycol monomethyl ether, ethylene glycol dimethyl ether, ethylene glycol monobutyl ether, propylene glycol monomethyl ether, propylene glycol dimethyl ether, propylene glycol monobutyl ether or dioxane; mineral oils such as paraffin-based mineral oil, naphthene-based mineral oil or refined mineral oils obtained by refining these oils by hydrorefining, solvent deasphalting, solvent extraction, solvent dewaxing, hydrodewaxing, catalytic dewaxing, hydrocracking, alkali distillation, sulfuric acid treatment or clay treatment; synthetic oils such as poly-α-olefins, ethylene-α-olefin copolymers, polybutenes, alkyl benzenes, alkyl naphthalenes, polyphenyl ethers, alkyl-substituted diphenyl ethers, polyol esters, dibasic acid esters, hindered esters, monoesters and gas to liquids (GTL), and mixtures thereof.

Examples of initiators that can be used include azo-based initiators such as 2,2'-azobis(2-methylpropionitrile), 2,2'-azobis(2-amidinopropane) dihydrochloride, 2,2'-azobis-(N,N-dimethyleneisobutyramidine) dihydrochloride or 1,1'-azobis(cyclohexyl-1-carbonitrile), hydrogen peroxide and organic peroxides such as benzoyl peroxide, t-butyl hydroperoxide, cumene hydroperoxide, methyl ethyl ketone peroxide or perbenzoic acid, persulfates such as sodium persulfate, potassium persulfate or ammonium persulfate, redox initiators such as hydrogen peroxide-Fe³⁺, and other known radical initiators.

Although the weight average molecular weight of the friction and wear reducing agent for lubricating oil of the present invention is required to be 2,000 to less than 40,000, since it is difficult to lower molecular weight in a polymerization reaction, the molecular weight easily reaches 40,000 or higher when carrying out an ordinary polymerization reaction. Although it is possible to produce a polymer of a prescribed molecular weight by controlling the reaction temperature and amount of initiator, a method comprising a step of polymerization using a solvent having a high chain transfer constant, a method comprising a step of polymerization adding a chain transfer agent, or a method comprising a step of polymerization combining the use of a solvent having a high chain transfer constant and a chain transfer agent is preferable since such methods facilitate production. The use of these methods enables a polymer having low molecular weight to be easily produced.

Examples of solvents having a high chain transfer constant include ethanol, propanol, isopropanol, butanol, isobutanol, toluene, ethyl benzene, isopropyl benzene, acetone, methyl ethyl ketone, chloroform and carbon tetrachloride.

Examples of chain transfer agents include thiol-based compounds such as mercaptoethanol, thioglycerol, thioglycolic acid, 3-mercaptopropionic acid, thiomalic acid, 2-mercaptoethanesulfonic acid, butanethiol, octanethiol, decanethiol, dodecanethiol, hexadecanethiol, octadecanethiol, cyclohexyl mercaptan, thiophenol, octyl thioglycolate or octyl 3-mercaptopropionate; secondary alcohols such as isopropyl alcohol; and phosphorous acid, hypophosphorous acid and salts thereof (sodium hypophosphite or potassium hypophosphite); lower thio oxides such as sulfurous acid, hydrogen sulfite, dithionous acid or metabisulfurous acid and salts thereof (sodium hyposulfite, sodium hydrogen sulfite, sodium dithionite or sodium metabisulfite).

Polymer (A) can also be obtained by copolymerizing monomers other than the monomers (a) and (b) within a range that does not impair the effects of the present invention. The method used to polymerize other monomers is not particularly specified, other monomers may be copolymerized after polymerizing the monomers (a) and (b), or other monomers may be copolymerized together with the monomers (a) and (b). The other monomers may be any monomers provided they have a double bond, and examples thereof include aromatic vinyl monomers such as styrene, vinyl toluene, 2,4-dimethylstyrene, 4-ethylstyrene or 2-vinylnaphthalene; aliphatic vinyl monomers such as vinyl acetate, vinyl propionate, vinyl octanoate, methyl vinyl ether, ethyl vinyl ether or 2-ethylhexyl vinyl ether; halogen-based vinyl monomers such as vinyl chloride, vinyl bromide, vinylidene chloride, allyl chloride or dichlorostyrene; acrylic esters such as methyl acrylate, ethyl acrylate, propyl acrylate, butyl acrylate, pentyl acrylate, hexyl acrylate, heptyl acrylate, octyl acrylate, 2-ethylhexyl acrylate or nonyl acrylate; and amino group-containing monomers such as allyl amine, aminoethyl acrylate, aminopropyl acrylate, aminobutyl acrylate, methylaminoethyl acrylate, 2-diphenylamineacrylamide, dimethylaminomethyl acrylate, dimethylaminomethyl acrylamide, N,N-dimethylaminostyrene, 4-vinylstyrene or N-vinylpyrrolidone. Among these, monomers having an acrylic group are preferable, and butyl acrylate, pentyl acrylate, hexyl acrylate, heptyl acrylate, octyl acrylate and 2-ethylhexyl acrylate are more preferable.

Although a methacrylic group has a structure similar to an acrylic group, the use of a monomer having a methacrylic group may cause poor solubility in base oil. In addition, since there are cases in which extreme pressure performance is not demonstrated or solubility in base oil becomes poor if the contents of these monomers are excessively high in the resulting copolymer, the content of these other monomers in the resulting copolymer is preferably 30% by weight or less, more preferably 20% by weight or less, even more preferably 10% by weight or less, and most preferably these other monomers are substantially not contained. Furthermore, although monomers (a) and (b) have an acrylic group, if this group is a methacrylic group, the effects of the present invention are not obtained, and for example, a copolymer produced using an alkyl methacrylate and hydroxyalkylene methacrylate does not allow the obtaining of high extreme pressure performance.

The lubricating oil composition of the present invention refers to that obtained by adding the friction and wear reducing agent for lubricating oil of the present invention to a base oil. Examples of base oils that can be used include mineral oils such as paraffin-based mineral oil, naphthene-based mineral oil, refined mineral oils obtained by refining these oils by hydrorefining, solvent deasphalting, solvent extraction, solvent dewaxing, hydrodewaxing, catalytic dewaxing, hydrocracking, alkali distillation, sulfuric acid treatment or clay treatment; synthetic oils such as poly-α-olefins, ethylene-α-olefin copolymers, polybutenes, alkyl benzenes, alkyl naphthalenes, polyphenyl ethers, alkyl-substituted diphenyl ethers, polyol esters, dibasic acid esters, hindered esters, monoesters or gas to liquids (GTL), and mixtures of mineral oil with synthetic oil.

The amount of the friction and wear reducing agent for lubricating oil of the present invention in the lubricating oil composition of the present invention is not particularly limited, but it is preferably added in an amount of 0.1 to 50% by weight, more preferably 1 to 30% by weight and even more preferably 3 to 20% by weight with respect to the total amount of the lubricating oil composition. If the amount is less than 0.1% by weight, extreme pressure performance may be unable to be obtained, while if the amount exceeds 50% by weight, there are cases in which the friction and wear reducing agent may not completely dissolve in the base oil as well as cases in which effects corresponding to the added amount are not obtained.

Moreover, the lubricating oil composition of the present invention does not preclude the addition of known lubricating oil additives, and additives such as antioxidants, friction reducing agents, oiliness improvers, cleaning agents, dispersants, viscosity index improvers, pour point depressants, rust inhibitors, corrosion inhibitors or antifoaming agents may be added within a range which does not impair the effects of the present invention.

Examples of antioxidants include phenol-based antioxidants such as 2,6-di-tertiary-butyl phenol (hereinafter, tertiary-butyl is to be abbreviated as t-butyl), 2,6-di-t-butyl-p-cresol, 2,6-di-t-butyl-4-methylphenol, 2,6-di-t-butyl-4-ethylphenol, 2,4-dimethyl-6-t-butylphenol, 4,4'-methylenebis(2,6-di-t-butylphenol), 4,4'-bis(2,6-di-t-butylphenol), 4,4'-bis(2-methyl-6-t-butylphenol), 2,2'-methylenebis(4-methyl-6-t-butylphenol), 2,2'-methylenebis(4-ethyl-6-t-butylphenol), 4,4'-butylidenebis(3-methyl-6-t-butylphenol), 4,4'-isopropylidenebis(2,6-di-t-butylphenol), 2,2'-methylenebis(4-methyl-6-cyclohexylphenol), 2,2'-methylenebis(4-methyl-6-nonylphenol), 2,2'-isobutylidenebis(4,6-dimethylphenol), 2,6-bis(2'-hydroxy-3'-t-butyl-5'-methylbenzyl)-4-methyl phenol, 3-t-butyl-4-hydroxyanisole, 2-t-butyl-4-hydroxyanisole, octyl 3-(4-hydroxy-3,5-di-t-butylphenyl) propionate, stearyl 3-(4-hydroxy-3,5-di-t-butylphenyl) propionate, oleyl 3-(4-hydroxy-3,5-di-t-butylphenyl) propionate, dodecyl 3-(4-hydroxy-3,5-di-t-butylphenyl) propionate, decyl 3-(4-hydroxy-3,5-di-t-butylphenyl) propionate,tetrakis{3-(4-hydroxy-3,5-di-t-butylphenyl)propiony loxymethyl}methane, glycerol 3-(4-hydroxy-3,5-di-t-butylphenyl) propionate monoester, esters of 3-(4-hydroxy-3,5-di-t-butylphenyl) propionic acid and glyceryl monooleyl ether, butylene 3-(4-hydroxy-3,5-di-t-butylphenyl) propionate glycol ester, butylene 3-(4-hydroxy-3,5-di-t-butylphenyl) propionate thiodiglycol ester, 4,4'-thiobis(3-methyl-6-t-butylphenol), 4,4'-thiobis(2-methyl-6-t-butylphenol), 2,2'-thiobis(4-methyl-6-t-butylphenol), 2,6-di-t-butyl-α-dimethylamino-p-cresol, 2,6-di-t-butyl-4-(N,N'-dimethylaminomethylphenol), bis(3,5-di-t-butyl-4-hydroxybenzyl) sulfide, tris{(3,5-di-t-butyl-4-hydroxyphenyl)propionyl-oxyethyl} isocyanurate, tris(3,5-di-t-butyl-4-hydroxyphenyl) isocyanurate, 1,3,5-tris(3,5-di-t-butyl-4-hydroxybenzyl) isocyanurate, bis{2-methyl-4-(3-n-alkylthiopropionyloxy)-5-t-butylphenyl} sulfide, 1,3,5-tris(4-t-butyl-3-hydroxy-2,6-dimethylbenzyl) isocyanurate, tetraphthaloyl-di(2,6-dimethyl-4-t-butyl-3-hydroxybenzylsulfid e), 6-(4-hydroxy-3,5-di-t-butylanilino)-2,4-bis(octylthio)-1,3,5-t riazine, 2,2-thio-{diethyl-bis-3-(3,5-di-t-butyl-4-hydroxyphenyl)} propionate, N,N'-hexamethylenebis(3,5-di-t-butyl-4-hydroxy-hydrocinnamide), 3,5-di-t-butyl-4-hydroxy-benzyl-phosphate diester, bis(3-methyl-4-hydroxy-5-t-butylbenzyl) sulfide, 3,9-bis[1,1-dimethyl-2-{β-(3-t-butyl-4-hydroxy-5-methylphenyl)p ropionyloxy}ethyl]-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl) benzene and bis{3,3'-bis-(4'-hydroxy-3'-t-butylphenyl) butyric acid} glycol ester; naphthylamine-based antioxidants such as 1-naphthylamine, phenyl-1-naphthylamine, p-octylphenyl-1-naphthylamine, p-nonylphenyl-1-naphthylamine, p-dodecylphenyl-1-naphthylamine or phenyl-2-naphthylamine; phenylenediamine-based antioxidants such as N,N'-diisopropyl-p-phenylenediamine, N,N'-diisobutyl-p-phenylenediamine, N,N'-diphenyl-p-phenylenediamine, N,N'-di-β-naphthyl-p-phenylenediamine, N-phenyl-N'-isopropyl-p-phenylenediamine, N-cyclohexyl-N'-phenyl-p-phenylenediamine, N-1,3-dimethylbutyl-N'-phenyl-p-phenylenediamine, dioctyl-p-phenylenediamine, phenylhexyl-p-phenylenediamine or phenyloctyl-p-phenylenediamine; diphenylamine-based antioxidants such as dipyridylamine, diphenylamine, p,p'-di-n-butyldiphenylamine, p,p'-di-t-butyldiphenylamine, p,p'-di-t-pentyldiphenylamine, p,p'-dioctyldiphenylamine, p,p'-dinonyldiphenylamine, p,p'-didecyldiphenylamine, p,p'-didodecyldiphenylamine, p,p'-distyryldiphenylamine, p,p'-dimethoxydiphenylamine, 4,4'-bis(4-α,α-dimethylbenzoyl)diphenylamine, p-isopropoxydiphenylamine or dipyridylamine; phenothiazine-based antioxidants such as phenothiazine, N-methylphenothiazine, N-ethylphenothiazine, 3,7-dioctylphenothiazine, phenothiazine carboxylic acid ester or phenoselenazine; and, zinc dithiophosphate. The amount of these antioxidants is preferably 0.01 to 5% by weight and more preferably 0.05 to 4% by weight with respect to the base oil.

Examples of friction reducing agents include organic molybdenum compounds such as oxymolybdenum dithiocarbamate sulfide or oxymolybdenum dithiophosphate sulfide. The amount of these friction reducing agents in terms of the content of molybdenum is preferably 30 to 2, 000 wtppm and more preferably 50 to 1,000 wtppm with respect to the base oil.

Examples of oiliness improvers include higher alcohols such as oleyl alcohol or stearyl alcohol; fatty acids such as oleic acid or stearic acid; esters such as oleyl glycerol ester, stearyl glycerol ester or lauryl glycerol ester; amides such as lauryl amide, oleyl amide or stearyl amide; amines such as lauryl amine, oleyl amine or stearyl amine; and ethers such as lauryl glyceryl ether or oleyl glyceryl ether. The amount of these oiliness improvers is preferably 0.1 to 5% by weight and more preferably 0.2 to 3% by weight with respect to the base oil.

Examples of cleaning agents include sulfonates, phenates, salicylates and phosphates of calcium, magnesium or barium and perbasic salts thereof. Among these, perbasic salts are preferable, and among perbasic salts, those having a total base number (TBN) of 30 to 500 mgKOH are more preferable. Moreover, salicylate-based cleaning agents free of phosphor and sulfur atoms are also preferable. The amount of these cleaning agents is preferably 0.5 to 10% by weight and more preferably 1 to 8% by weight with respect to the base oil.

Examples of dispersants include succinic acid imides, succinic acid esters, benzylamines and boric acid modification products thereof, to which have been added an alkyl group or alkenyl group, having a weight average molecular weight of about 500 to 3,000. The amount of these dispersants is preferably 0.5 to 10% by weight and more preferably 1 to 8% by weight based with respect to the base oil.

Examples of viscosity index improvers include poly(C1-18)alkyl (meth)acrylates, (C1-18)alkyl acrylate/(C1-18) alkyl (meth)acrylate copolymers, diethylaminoethyl (meth)acrylate/(C1-18)alkyl (meth)acrylate copolymers, ethylene/(C1-18)alkyl (meth)acrylate copolymers, polyisobutylene, polyalkylstyrene, ethylene/propylene copolymers, styrene/maleic acid ester copolymers and styrene/isoprene hydrogenated polymers. Alternatively, dispersible or multifunctional viscosity index improvers to which dispersing properties are imparted may also be used. The average molecular weight is about 10,000 to 1,500,000. The amount of these viscosity index improvers is preferably 0.1 to 20% by weight and more preferably 0.3 to 15% by weight with respect to the base oil. Furthermore, a methacrylate-based polymer is preferably used for the viscosity index improver. This is because methacrylate-based polymers demonstrate superior performance as viscosity index improvers in comparison with acrylate-based polymers. Acrylate-based polymers are known to demonstrate barely any function as viscosity index improvers, and although the friction and wear reducing agent of the present invention has a structure that resembles that of a specific viscosity index improver, it does not function as a viscosity index improver.

Examples of pour point depressants include poly(alkyl methacrylates), poly(alkyl acrylates), poly(alkyl styrenes) and polyvinyl acetate having a weight average molecular weight of 1,000 to 100,000. The amount of these pour point depressants is preferably 0.005 to 3% by weight and more preferably 0.01 to 2% by weight with respect to the base oil. Methacrylate-based polymers are preferable for the pour point depressant as well as viscosity index improvers, and the friction and wear reducing agent of the present invention demonstrates barely any function as a pour point depressant.

Examples of rust inhibitors include sodium nitrite, calcium salts of oxidized paraffin wax, magnesium salts of oxidized paraffin wax, tallow acid alkaline metal salts, alkaline earth metal salts or amine salts, alkenyl succinic acids or alkenyl succinic acid hemiesters (in which the molecular weight of the alkenyl group is about 100 to 300), sorbitan monoesters, nonylphenol ethoxylates and calcium salts of lanolin fatty acid. The amount of these rust inhibitors is preferably 0.01 to 3% by weight and more preferably 0.02 to 2% by weight with respect to the base oil.

Examples of corrosion inhibitors include benzotriazole, benzimidazole, benzothiazole, benzothiadiazole and tetraalkylthiuram disulfide. The amount of these corrosion inhibitors is preferably 0.01 to 3% by weight and more preferably 0.02 to 2% by weight with respect to the base oil.

Examples of antifoaming agents include polydimethyl silicone, trifluoropropylmethyl silicone, colloidal silica, poly(alkyl acrylates), poly(alkyl methacrylates), alcohol ethoxy/propoxylates, fatty acid ethoxy/propoxylates and sorbitan partial fatty acid esters. The amount of these antifoaming agents is preferably 0.001 to 0.1% by weight and more preferably 0.001 to 0.01% by weight with respect to the base oil.

The lubricating oil composition of the present invention can be used in any lubricating application. For example, it may be used in lubricating oil such as engine oil, gear oil, turbine oil, hydraulic oil, fire-resistant hydraulic fluid, refrigerator oil, compressor oil, vacuum pump oil, bearing oil, insulating oil, sliding surface oil, rock drill oil, metalworking oil, plastic working oil, heat treating oil or grease. Among these, the lubricating oil composition of the present invention is preferably used in engine oil, bearing oil or grease, and most preferably used in engine oil.

### Examples

The following provides a detailed explanation of the present invention through examples thereof.

Polymers used in testing were produced using the monomers described below.
a-1: Decyl acrylate (R¹ = decyl group in general formula (1))
a-2: Dodecyl acrylate (R¹ = dodecyl group in general formula (1))
a-3: Octadecyl acrylate (R¹ = octadecyl group in general formula (1))
a-4 : Butyl acrylate (R¹ = butyl group in general formula (1))
a-5 : 2-ethylhexyl acrylate (R¹ = 2-ethylhexyl group in general formula (1))
a-6: Dodecyl methacrylate
a-7: Hexadecyl methacrylate
b-1: 2-hydroxyethyl acrylate (R² = ethylene group in general formula (2))
b-2 : 2-hydroxypropyl acrylate (R² = propylene group in general formula (2))
b-3: 2-hydroxyethyl methacrylate
b-4: N,N-dimethylaminoethyl acrylate

GPC was carried out under the following conditions.
GPC system: Semi-micro HPLC 7400 (GL Sciences)
Columns: Four columns consisting of the GPC KF-401HQ, GPC KF-402.5 and two GPC LF-404 columns and connected in series (all manufactured by Showa Denko)
Detector: GL-7454 (GL Sciences)
Flow rate: 0.3 ml/min
Sample concentration: 0.2% by weight (THF solution)
Sample volume: 5 µl
Column temperature: 40°C

Molecular weights were calculated by comparing with a styrene standard.

### <Synthesis of Sample 1>

144 g (0.6 moles) of dodecyl acrylate (a-2) as monomer (a), 46 g (0.4 moles) of 2-hydroxyethyl acrylate (b-1) as monomer (b) and 190 g of 2-propanol as solvent were charged into a four-necked flask having a volume of 500 ml and equipped with a thermometer, nitrogen introduction tube and stirrer. The inside of the flask was replaced with nitrogen, and after adding 0.8 g of 2,2'-azobis(2-methylpropionitrile)as an initiator, the temperature was raised slowly while stirring and the contents were allowed to react for 5 hours while refluxing at a temperature of 75°C to 85°C to obtain Sample 1. The monomer ratio of Sample 1 was monomer(a)/monomer (b) = 60/40 (molar ratio), and as a result of measuring molecular weight by GPC, the weight average molecular weight in terms of styrene was 22,000.

### <Synthesis of Sample 2>

Sample 2 having a monomer ratio of monomer (a)/monomer (b) = 60/40 (molar ratio) was obtained by the same method and using the same apparatus as Sample 1 with the exception of changing the solvent from 2-propanol to a mixture of 2-propanol and dioxane (weight ratio of 2-propanol/dioxane = 5/5). As a result of measuring the molecular weight of Sample 2 by GPC, the weight average molecular weight thereof in terms of styrene was 28,000.

### <Synthesis of Sample 3>

Sample 3 having a monomer ratio of monomer (a)/monomer (b) = 60/40 (molar ratio) was obtained by the same method and using the same apparatus as Sample 1 with the exception of changing the solvent from 2-propanol to a mixture of 2-propanol and dioxane (weight ratio of 2-propanol/dioxane = 1/9). As a result of measuring the molecular weight of Sample 3 by GPC, the weight average molecular weight thereof based on styrene was 45,000.

### <Synthesis of Sample 4>

Sample 4 having a monomer ratio of monomer (a)/monomer (b) = 60/40 (molar ratio) was obtained by the same method and using the same apparatus as Sample 1 with the exception of changing the solvent from 2-propanol to dioxane. As a result of measuring the molecular weight of Sample 4 by GPC, the weight average molecular weight thereof in terms of styrene was 230,000.

### <Synthesis of Sample 5>

Sample 5 having a monomer ratio such that monomer (a) /monomer (b) = 60/40 (molar ratio) was obtained by the same method and using the same apparatus as Sample 1 with the exception of changing the solvent from 2-propanol to dioxane and further adding 1 g of dodecanethiol as a chain transfer agent immediately prior to addition of the catalyst. As a result of measuring the molecular weight of Sample 5 by GPC, the weight average molecular weight thereof in terms of styrene was 38,000.

### <Synthesis of Samples 6 to 18>

Samples 6 to 18 having different types and ratios of monomer (a) and monomer (b) were obtained by the same method and using the same apparatus of Sample 1 with the exception of changing the types and ratio of monomer (a) and monomer (b). The compositions of Samples 6 to 18 and the results of measuring the molecular weights thereof by GPC are shown in Table 1.

**[Table 1]**

| | Types of Monomers | | Monomer Molar Ratio | | Molecular Weight |
|---|---|---|---|---|---|
| | (a) | (b) | (a) | (b) | |
| Sample 1 | a-2 | b-1 | 60 | 40 | 22,000 |
| Sample 2 | a-2 | b-1 | 60 | 40 | 28,000 |
| Sample 3 | a-2 | b-1 | 60 | 40 | 45,000 |
| Sample 4 | a-2 | b-1 | 60 | 40 | 230,000 |
| Sample 5 | a-2 | b-1 | 60 | 40 | 38,000 |
| Sample 6 | a-2 | b-1 | 40 | 60 | 28,000 |
| Sample 7 | a-2 | b-1 | 50 | 50 | 25,000 |
| Sample 8 | a-2 | b-1 | 70 | 30 | 23,000 |
| Sample 9 | a-2 | b-1 | 80 | 20 | 24,000 |
| Sample 10 | a-2 | b-1 | 95 | 5 | 20,000 |
| Sample 11 | a-1 | b-2 | 60 | 40 | 19,000 |
| Sample 12 | a-3 | b-2 | 60 | 40 | 35,000 |
| Sample 13 | a-2 | b-3 | 60 | 40 | 22,000 |
| Sample 14 | a-2 | b-4 | 60 | 40 | 21,000 |
| Sample 15 | a-4 | b-1 | 60 | 40 | 18,500 |
| Sample 16 | a-5 | b-1 | 60 | 40 | 20,500 |
| Sample 17 | a-6 | b-1 | 60 | 40 | 23,000 |
| Sample 18 | a-7 | b-1 | 60 | 40 | 25,500 |

### Other Samples

Sample 19: Tricresyl phosphate
Sample 20: Chlorinated paraffin (chlorine content: 40% by weight)
Sample 21: Glyceryl monooleyl ester

Furthermore, among the above-mentioned Samples 1 to 21, examples of the present invention correspond to Samples 1, 2, 5, 7, 8, 9, 11 and 12, while the other samples are comparative examples.

### <Friction Test>

The above-mentioned Samples 1 to 21 were heated and dissolved in the following base oils to a concentration of 5% by weight (the added amount in terms of solid content) followed by measuring the coefficients of friction thereof using a shell-type high-speed four-ball tester. More specifically, the test method comprisedg measuring the coefficient of friction under conditions of a rotating speed of 300 rpm, load of 10 kgf and temperature of 40°C. Furthermore, the base oils to which Sample 4, 17 or 18 was added became uniform solutions by heating them, and although precipitates formed when returned to room temperature, sampling was carried out while still in a uniform state and those samples were immediately used in testing. In addition, since Samples 6, 15 and 16 did not dissolve even if the base oil was heated to 100°C, testing was not carried out on those samples.

Base Oil 1: Mineral oil, kinematic viscosity: 4.24 mm²/S (100°C), 19.65 mm²/S (40°C), viscosity index: 126
Base Oil 2: Synthetic oil (poly-α-olefin), kinematic viscosity: 4.0 mm²/S (100°C), 18.4 mm²/S (40°C), viscosity index: 119

### <Extreme Pressure Test>

The above-mentioned Samples 1 to 21 were heated and dissolved in the same base oil as that used in the friction test to a concentration of 1% by weight (the added amount in terms of on solid content) to prepare test solutions followed by measuring the wear track diameters of the test pieces using an SRV tester (SRV Type III, Optimol). The test conditions comprised placing a spherical test piece on a flat test piece having 1 ml of test solution placed thereon, and after sliding the spherical test piece back and forth for 60 minutes at a load of 100 N, amplitude of 1 mm and frequency of 50 Hz, the diameter of the wear track present on the spherical test piece was measured. Furthermore, a uniform solution resulted following heating of the base oil added in Samples 4, 17 and 18, and although a precipitate formed when returned to room temperature, sampling was carried out while still in a uniform state and those samples were immediately used in testing. In addition, since Samples 6, 15 and 16 did not dissolve even if the base oil was heated to 100°C, testing was not carried out on those samples.

**[Table 2]**

| | | Sample | Base Oil | Friction Test (Coefficient of Friction) | Extreme Pressure Test (wear track diameter: mm) |
|---|---|---|---|---|---|
| Examples | 1 | 1 | 1 | 0.11 | 0.41 |
| | 2 | 2 | 1 | 0.11 | 0.43 |
| | 3 | 5 | 1 | 0.12 | 0.45 |
| | 4 | 7 | 1 | 0.13 | 0.41 |
| | 5 | 8 | 1 | 0.12 | 0.45 |
| | 6 | 9 | 1 | 0.12 | 0.46 |
| | 7 | 11 | 1 | 0.11 | 0.44 |
| | 8 | 12 | 1 | 0.12 | 0.47 |
| | 9 | 1 | 2 | 0.11 | 0.42 |
| | 10 | 2 | 2 | 0.12 | 0.45 |
| Comp. Examples | 1 | 3 | 1 | 0.17 | 0.45 |
| | 2 | 4 | 1 | 0.18 | 0.47 |
| | 3 | 6 | 1 | - | - |
| | 4 | 10 | 1 | 0.17 | 0.58 |
| | 5 | 13 | 1 | 0.16 | 0.62 |
| | 6 | 14 | 1 | 0.16 | 0.50 |
| | 7 | 15 | 1 | - | - |
| | 8 | 16 | 1 | - | - |
| | 9 | 17 | 1 | 0.17 | 0.63 |
| | 10 | 18 | 1 | 0.16 | 0.65 |
| | 11 | 19 | 1 | 0.18 | 0.46 |
| | 12 | 20 | 1 | 0.23 | 0.72 |
| | 13 | 21 | 1 | 0.12 | 0.67 |
| | 14 | 3 | 2 | 0.18 | 0.47 |
| | 15 | - | 1 | 0.21 | 0.63 |
| | 16 | - | 2 | 0.23 | 0.65 |

| | | | | | |
|---|---|---|---|---|---|
| *Test results of Comparative Example 15 and 16 indicate those obtained by using only Base Oil 1 and Base Oil 2, respectively. | | | | | |

Although friction cannot be considered to be low unless the coefficient of friction is at least below 0.15, polymers having a molecular weight in excess of 40,000 did not demonstrate a coefficient of friction below 0.15 even if produced with monomers used in the present application. On the other hand, since the results of the extreme pressure test using methacrylic polymers shows a wear track diameter of 0.62 mm in Comparative Example 5, 0.63 mm in Comparative Example 9 and 0.65 mm in Comparative Example 10 with respect to 0.63 mm for the Comparative Example using only base oil, methacrylic polymers were confirmed to demonstrate hardly any extreme pressure performance or conversely exacerbate extreme pressure performance.

## Claims

1. A friction and wear reducing agent for lubricating oil consisting of a copolymer (A) comprising an alkyl acrylate (a) represented by the following general -formula (1) and a hydroxyalkyl acrylate (b) represented by the following general formula (2) as essential constituent monomers, wherein the constitutive ratio of (a) to (b) is 50/50 to 90/10 (molar ratio) and the weight average molecular weight thereof is 2,000 to less than 40,000 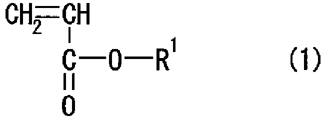 wherein in the above formula, R¹ represents an alkyl group having 10 to 18 carbon atoms 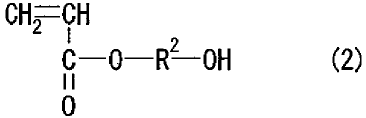 wherein in the above formula, R² represents an alkylene group having 2 to 4 carbon atoms.

2. The friction and wear reducing agent for lubricating oil according to claim 1, wherein the copolymer (A) is a copolymer consisting of an alkyl acrylate (a) and a hydroxyalkyl acrylate (b).

3. The friction and wear reducing agent for lubricating oil according to claim 1 or 2, wherein R¹ of the alkyl acrylate (a) is an alkyl group having 10 to 14 carbon atoms.

4. A lubricating oil composition comprising a base oil and the friction and wear reducing agent for lubricating oil according to claim 1, 2 or 3, wherein the friction and wear reducing agent for lubricating oil is contained in an amount of 0.1 to 50% by weight with respect to the total amount of the lubricating oil composition.

## Patentansprüche

1. Reibungs- und verschleißminderndes Mittel für Schmieröl, bestehend aus einem Copolymer (A), welches als wesentliche Grundmonomere ein durch die folgende allgemeine Formel (1) dargestelltes Alkylacrylat (a) und ein durch die folgende allgemeine Formel (2) dargestelltes Hydroxyalkylacrylat (b) aufweist, wobei das konstitutive Verhältnis von (a) zu (b) im Bereich von 50/50 bis 90/10 (molares Verhältnis) liegt, und dessen gewichtsgemitteltes Molekulargewicht 2.000 bis unter 40.000 beträgt, 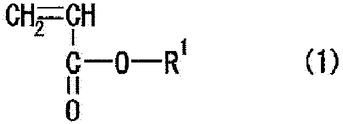 wobei R¹ in der obigen Formel eine Alkylgruppe mit 10 bis 18 Kohlenstoffatomen darstellt, 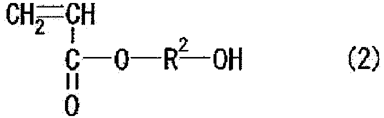 wobei R² in der obigen Formel eine Alkylengruppe mit 2 bis 4 Kohlenstoffatomen darstellt.

2. Reibungs- und verschleißminderndes Mittel für Schmieröl nach Anspruch 1, wobei das Copolymer (A) ein Copolymer ist, das aus einem Alkylacrylat (a) und einem Hydroxyalkylacrylat (b) besteht.

3. Reibungs- und verschleißminderndes Mittel für Schmieröl nach Anspruch 1 oder 2, wobei R¹ des Alkylacrylats (a) für eine Alkylgruppe mit 10 bis 14 Kohlenstoffatomen steht.

4. Schmierölzusammensetzung mit einem Basisöl und dem reibungs- und verschleißmindernden Mittel für Schmieröl nach Anspruch 1, 2 oder 3, wobei das reibungs- und verschleißmindernde Mittel für Schmieröl in einer Menge von 0,1 bis 50 Gew.-% mit Bezug auf die Gesamtmenge der Schmierölzusammensetzung enthalten ist.

## Revendications

1. Agent réducteur de friction et d'usure pour huile lubrifiante consistant en un copolymère (A) comprenant un acrylate d'alkyle (a) représenté par la formule générale (1) suivante et un acrylate d'hydroxyalkyle (b) représenté par la formule générale (2) suivante comme monomères constituants essentiels, dans lequel le rapport constitutif entre (a) et (b) est de 50/50 à 90/10 (rapport molaire) et sa masse moléculaire moyenne en poids est de 2.000 à moins de 40.000 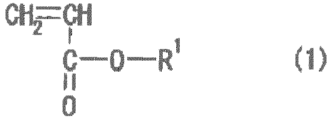 dans lequel dans la formule ci-dessus, R¹ représente un groupe alkyle ayant de 10 à 18 atomes de carbone 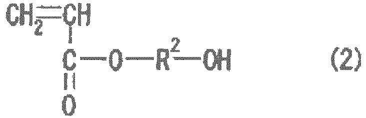 dans lequel dans la formule ci-dessus, R² représente un groupe alkylène ayant de 2 à 4 atomes de carbone.

2. Agent réducteur de friction et d'usure pour huiles lubrifiantes selon la revendication 1, dans lequel le copolymère (A) est un copolymère constitué d'un acrylate d'alkyle (a) et d'un acrylate d'hydroxyalkyle (b).

3. Agent réducteur de friction et d'usure pour huiles lubrifiantes selon la revendication 1 ou 2, dans lequel R¹ de l'acrylate d'alkyle (a) est un groupe alkyle ayant de 10 à 14 atomes de carbone.

4. Composition d'huile lubrifiante comprenant une huile de base et l'agent réducteur de friction et d'usure pour huile lubrifiante selon la revendication 1, 2 ou 3, dans laquelle l'agent réducteur de friction et d'usure pour l'huile lubrifiante est contenu en une quantité de 0,1 à 50% en poids par rapport à la quantité totale de la composition d'huile lubrifiante.
